# EUROPEAN PATENT APPLICATION

(11) **EP 3 984 624 A1**
(43) Date of publication of application: **20.04.2022**
(21) Application number: 20825707.1
(22) Date of filing: 29.05.2020
(51) Int. Cl.: B01D 53/78, B01D 53/56

(54) **METHOD AND SYSTEM FOR WET TREATMENT OF NITROGEN OXIDE WASTE GASES**

(30) Priority: 17.06.2019 CN 201910522026
(71) Applicant: S.Y. Technology, Engineering & Construction Co., Ltd., Beijing 100142 (CN); China Electronics Engineering Design Institute Co., Ltd., Beijing 100142 (CN)
(72) Inventor: QIN, Xueli, Beijing 100142 (CN); ZHANG, Qun, Beijing 100142 (CN); LIN, Dongan, Beijing 100142 (CN); XU, Gang, Beijing 100142 (CN); PENG, Dingzhi, Beijing 100142 (CN); SUN, Xiaohong, Beijing 100142 (CN)
(74) Representative: Mathys & Squire
(86) International application number: PCT/CN2020/093376
(87) International publication number: WO 2020/253500

(57) **Abstract**

The present application relates to the field of waste gas treatment, and specifically relates to a method and a system for wet treatment of nitrogen oxide waste gases. The method for the wet treatment of nitrogen oxide waste gases comprises the following steps: S100: the step of oxidizing nitric oxide to nitrogen dioxide; S101: the step of reducing the nitrogen dioxide; and S102: the step of treating acidic waste gases.

## Description

### Cross-reference to related applications

This application claims priority to Chinese patent application No. 201910522026.5, filed to the China National Intellectual Property Administration on June 17, 2019, entitled "Method and System for Wet Treatment of Nitrogen Oxide Waste gas", the entire contents of which are incorporated by reference in this application.

### Field

The present application relates to the field of waste gas treatment, and in particular to a method and system for wet treatment of nitrogen oxide waste gases.

### Background

Currently, the mainstream products of the electronics industry are semiconductor chips and display devices. The processes such as cleaning and chemical vapor deposition (CVD) in production of these products will generate nitrogen oxides (NOx). In addition, some high-temperature oxidation processes will also generate NOx. NOx is an important cause of photochemical smog and acid rain, and may also irritate the lungs and seriously affect human health if inhaled for a long time.

Traditional methods of NOx treatment can be mainly classified into three processes: a catalytic reduction method, a liquid absorption method and an adsorption method.

The catalytic reduction method is not very efficient in removing NOx, and requires high temperature conditions, which consumes a lot of electrical energy or fuel gas.

Absorption of NOx in waste gas by the liquid absorption method genereally uses NaOH as an absorption liquid. But even after three-stage drip washing by the absorption liquid, the treatment efficiency is only about 80%. If the NO content is high, the NOx removal efficiency will be even lower.

The adsorption method has a higher efficiency for NOx removal. However, due to the limitation of the adsorption capacity of adsorbents, the adsorption method requires a relatively large amount of adsorbents if the concentration of NOx in the waste gas is high. And, the adsorbents need to be replaced regularly after saturation, thus the equipment is huge, the cost is high, and the operation and maintenance workload is large.

### Summary

In view of the deficiencies of the prior art, the present application provides a method and system for wet treatment of nitrogen oxide waste gases.

According to one aspect of the present application, provided is a method for wet treatment of nitrogen oxide waste gas, including the following steps:
S100: oxidizing nitrogen monoxide to nitrogen dioxide;
S101: reducing nitrogen dioxide; and
S102: treating an acidic waste gas.

According to some embodiments of the present application, in the S100, an oxidizer solution is used to perform the oxidizing, wherein an oxidizer in the oxidizer solution is a soluble salt oxidizer.

According to some embodiments of the present application, the oxidizer in the oxidizer solution is selected from at least one of hypochlorite, chlorite or permanganate.

According to some embodiments of the present application, the oxidizer in the oxidizer solution is selected from at least one of NaClO, NaClO₂ or KMnO₄.

According to some embodiments of the present application, in the S100, a redox potential of the oxidizer solution is between 200mV and 800mV when oxidizing nitrogen monoxide to nitrogen dioxide.

According to some embodiments of the present application, in the S101, a reductant solution is used to perform the reducing, wherein a reductant in the reductant solution is a soluble salt reductant.

According to some embodiments of the present application, the soluble salt reductant includes at least one of a sulfide salt, a hydrosulphide salt, a sulfate or a thiosulfate.

According to some embodiments of the present application, the reductant in the reductant solution is selected from at least one of Na₂S, NaHS, Na₂SO₃ or Na₂S₂O₃.

According to some embodiments of the present application, in the S101, a redox potential of the reductant solution is between -200mV and -500mV in response to reduce nitrogen dioxide.

According to some embodiments of the present application, in the S102, an alkali solution is used for treating the acidic waste gas.

According to some embodiments of the present application, the alkali solution includes at least one of sodium hydroxide, potassium hydroxide, barium hydroxide or an ammonia solution.

According to some embodiments of the present application, in the step S102, a sodium hydroxide solution is used for treating the acidic waste gas.

According to some embodiments of the present application, the sodium hydroxide solution has a pH value of 9 to 13.

According to another aspect of the present application, provided is a system for wet treatment of nitrogen oxide waste gas, including: a nitrogen monoxide oxidizing device, a nitrogen dioxide reducing device, and an acidic waste gas treating device, which are arranged in sequence from upstream to downstream.

According to some embodiments of the present application, the system further includes an air inlet pipeline, an air exhaust device and an air exhaust pipeline, wherein the air exhaust device is arranged downstream of the acidic waste gas treating device, and the air exhaust pipeline is arranged downstream of the air exhaust device; the air inlet pipeline is arranged upstream of the nitrogen monoxide oxidizing device and is connected to the nitrogen monoxide oxidizing device.

According to some embodiments of the present application, the nitrogen monoxide oxidizing device includes a housing, a spray port, a circulating fluid reservoir, a circulating fluid pump, a liquid level gauge, a redox potential meter, a conductivity meter, an oxidizer solution supply pipe, a water supply pipe, a sewage discharge pipe, a first valve for controlling replenishment of an oxidizer solution, a second valve for controlling replenishment of water, a third valve for controlling discharge of sewage, an automatic controller, a gas inlet for entry of nitrogen oxide waste gas, a gas outlet for discharge of the treated waste gas, and a circulating fluid collection port;
the spray port is arranged in the housing, the gas inlet is arranged upstream of the housing and the gas outlet is arranged downstream of the housing; the circulating fluid collection port is arranged between the housing and the circulating fluid reservoir; and a circulating fluid in the circulating fluid reservoir is pumped by the circulating fluid pump, and enters the housing through the spray port; and
the circulating fluid reservoir is separately connected to the liquid level gauge, the redox potential meter, and the conductivity meter; the automatic controller is electrically connected to the liquid level gauge, the automatic controller is electrically connected to the second valve, the automatic controller is electrically connected to the redox potential meter, the automatic controller is electrically connected to the first valve, the automatic controller is electrically connected to the conductivity meter, and the automatic controller is electrically connected to the third valve; and the first valve is arranged on the oxidizer solution supply pipe, the second valve is arranged on the water supply pipe and the third valve is arranged on the sewage discharge pipe.

According to some embodiments of the present application, the nitrogen monoxide oxidizing device further includes a packing layer and a smog removal layer which are fixed inside the housing, wherein the packing layer is located upstream of the smog removal layer.

According to some embodiments of the present application, the nitrogen dioxide reducing device includes a housing, a spray port, a circulating fluid reservoir, a circulating fluid pump, a liquid level gauge, a redox potential meter, a conductivity meter, a reductant solution supply pipe, a water supply pipe, a sewage discharge pipe, a first valve for controlling replenishment of a reductant solution, a second valve for controlling replenishment of water, a third valve for controlling discharge of sewage, an automatic controller, a gas inlet for entry of waste gas treated by the nitrogen monoxide oxidizing device, the gas outlet for discharge of the treated waste gas, and a circulating fluid collection port;
the spray port is arranged in the housing, the gas inlet is arranged upstream of the housing and the gas outlet is arranged downstream of the housing; the circulating fluid collection port is arranged between the housing and the circulating fluid reservoir; and a circulating fluid from the circulating fluid reservoir is pumped by the circulating fluid pump, and enters the housing through the spray port; and
the circulating fluid reservoir is separately connected to the liquid level gauge, the redox potential meter, and the conductivity meter; the automatic controller is electrically connected to the liquid level gauge, the automatic controller is electrically connected to the second valve, the automatic controller is electrically connected to the redox potential meter, the automatic controller is electrically connected to the first valve, the automatic controller is electrically connected to the conductivity meter, and the automatic controller is electrically connected to the third valve; and the first valve is arranged on the reductant solution supply pipe, the second valve is arranged on the water supply pipe and the third arranged is set on the sewage discharge pipe.

According to some embodiments of the present application, the nitrogen dioxide reducing device further includes a packing layer and a smog removal layer which are fixed inside the housing, wherein the packing layer is located upstream of the smog removal layer.

According to some embodiments of the present application, the acidic waste gas treating device includes a housing, a spray port, a circulating fluid reservoir, a circulating fluid pump, a liquid level gauge, a pH value tester, a conductivity meter, a sodium hydroxide solution supply pipe, a water supply pipe, a sewage discharge pipe, a first valve for controlling replenishment of a sodium hydroxide solution, a second valve for controlling replenishment of water, a third valve for controlling discharge of sewage, an automatic controller, a gas inlet for entry of waste gas treated by the nitrogen dioxide reducing device, a gas outlet for discharge of the treated waste gas, and a circulating fluid collection port;
the spray port is arranged in the housing, the gas inlet is arranged upstream of the housing and the gas outlet is arranged downstream of the housing; the circulating fluid collection port is arranged between the housing and the circulating fluid reservoir; and a circulating fluid in the circulating fluid reservoir is pumped by the circulating fluid pump, and enters the housing through the spray port; and
the circulating fluid reservoir is separately connected to the liquid level gauge, the pH value tester, and the conductivity meter; the automatic controller is electrically connected to the liquid level gauge, the automatic controller is electrically connected to the second valve, the automatic controller is electrically connected to the pH value tester, the automatic controller is electrically connected to the first valve, the automatic controller is electrically connected to the conductivity meter, and the automatic controller is electrically connected to the third valve; and the first valve is arranged on the sodium hydroxide solution supply pipe, the second valve is arranged on the water supply pipe, and the third valve is arranged on the sewage discharge pipe.

According to some embodiments of the present application, the acidic waste gas treating device further includes a packing layer and a smog removal layer which are fixed inside the housing, and the packing layer is located upstream of the smog removal layer.

According to some embodiments of the present application, the nitrogen monoxide oxidizing device is vertical or horizontal, the nitrogen dioxide reducing device is vertical or horizontal, and the acidic waste gas treating device is vertical or horizontal.

According to some embodiments of the present application, the nitrogen monoxide oxidizing device, the nitrogen dioxide reducing device, and the acidic waste gas treating device are all vertical.

According to some embodiments of the present application, the nitrogen monoxide oxidizing device, the nitrogen dioxide reducing device, and the acidic waste gas treating device are all horizontal.

The present application has the following beneficial effects that the method for wet treatment of nitrogen oxide waste gas provided in the present application has a treatment efficiency of up to 95%, which is significantly higher than the traditional catalytic reduction method and liquid absorption method for treating NOₓ, reducing atmospheric pollution; and the nitrogen monoxide oxidizing device in the treatment system provided in the present application can first oxidize NO to NO₂, and thus the treatment efficiency of the system is always ensured to be 90% regardless of the proportion of NO in the waste gas. The processes of adding reactants (an oxidizer, a reductant, sodium hydroxide), replenishing water and discharging sewage in the nitrogen monoxide oxidizing device, nitrogen dioxide reducing device and acidic waste gas treating device are automatically controlled by the automatic controller through the valves, which makes the system operation stable and reliable, and the operation and maintenance simple. The system provided in the present application is obviously better than the traditional system of NOₓ treatment by the adsorption method. In addition, when using the method and system of this application to treat nitrogen oxide waste gas, there is no need to heat the waste gas, which saves energy compared with the traditional catalytic reduction method.

### Brief Description of the Drawings

FIG. 1 is a schematic diagram of a system for wet treatment of nitrogen oxide waste gas according to a first embodiment of the present application;
FIG. 2 is a schematic diagram of a nitrogen monoxide oxidizing device according to the present application;
FIG. 3 is a schematic diagram of a nitrogen dioxide reducing device according to the present application;
FIG. 4 is a schematic diagram of an acidic waste gas treating device according to the present application; and
FIG. 5 is a schematic diagram of a system for wet treatment of nitrogen oxide waste gas according to a second embodiment of the present application.

Wherein, 1-nitrogen monoxide oxidizing device: 101-housing, 120-spray port, 121-circulating fluid reservoir, 104-circulating fluid pump, 105-liquid level gauge, 106-redox potential meter, 107-conductivity meter, 131-oxidizer solution supply pipe, 132-water supply pipe, 133-sewage discharge pipe, 108-first valve, 109-second valve, 110-third valve, 111-automatic controller, 141-gas inlet, 142-gas outlet, 143-circulating fluid collection port, 102-packing layer, and 103-smog removal layer;
2-nitrogen dioxide reducing device: 201-housing, 220-spray port, 221-circulating fluid reservoir, 204-circulating fluid pump, 205-liquid level gauge, 206-redox potential meter, 207-conductivity meter, 231-reductant solution supply pipe, 232-water supply pipe, 233-sewage discharge pipe, 208-first valve, 209-second valve, 210-third valve, 211-automatic controller, 241-gas inlet, 242-gas outlet, 243-circulating fluid collection port, 202-packing layer, and 203-smog removal layer;
3-acidic waste gas treating device: 301-housing, 320-spray port, 321-circulating fluid reservoir, 304-circulating fluid pump, 305-liquid level gauge, 306-pH value tester, 307-conductivity meter, 331-sodium hydroxide solution supply pipe, 332-water supply pipe, 333-sewage discharge pipe, 308-first valve, 309-second valve, 310-third valve, 311-automatic controller, 341-gas inlet, 342-gas outlet, 343-circulating fluid collection port, 302-packing layer, and 303-smog removal layer; and
4-air exhaust device, 5-air inlet pipeline, 6-air exhaust pipeline.

### Detailed Description of the Embodiments

The detailed description is only an illustration of the present application and not a limitation of the contents of the present application. The application will be further illustrated and described below in conjunction with specific embodiments.

The main components in the nitrogen oxide waste gas of this application are N₂O, NO and NO₂. The nitrogen oxide waste gas first enters a nitrogen monoxide oxidizing device, and NO in the waste gas is in contact with and reacts with an oxidizer in a circulating fluid to oxidize NO to into NO₂, and at this time, the main component of the waste gas is NO₂; after NO₂-containing waste gas enters a nitrogen dioxide reducing device, NO₂ in the waste gas reacts with a reductant in a circulating fluid, so that NO₂ is reduced to harmless N₂. When NO₂ reacts with the reductant (mainly sulfide), in addition to reducing NO₂ to harmless N₂, there is also a trace amount of H₂S gas produced. Although the amount of H₂S gas is small, there is a bad odor. There are usually other acidic substances in the waste gas. Therefore, it is necessary for the waste gas to be subjected to acidic waste gas neutralization in the next stage. After multi-stage treatment, nitrogen oxides and acidic substances in the waste gas have been removed, which meets the emission standards and can be discharged into the atmosphere via the air exhaust device 4.

In this application, the acidic waste gas refers in particular to acidic gas of which the main component is hydrogen sulfide produced during the treatment of the nitrogen dioxide reducing device, and acidic waste gas originally contained in the waste gas before entering the nitrogen monoxide oxidizing device.

The valves in this application can be selected from electrically operated two-way valves, three-way valves, etc.

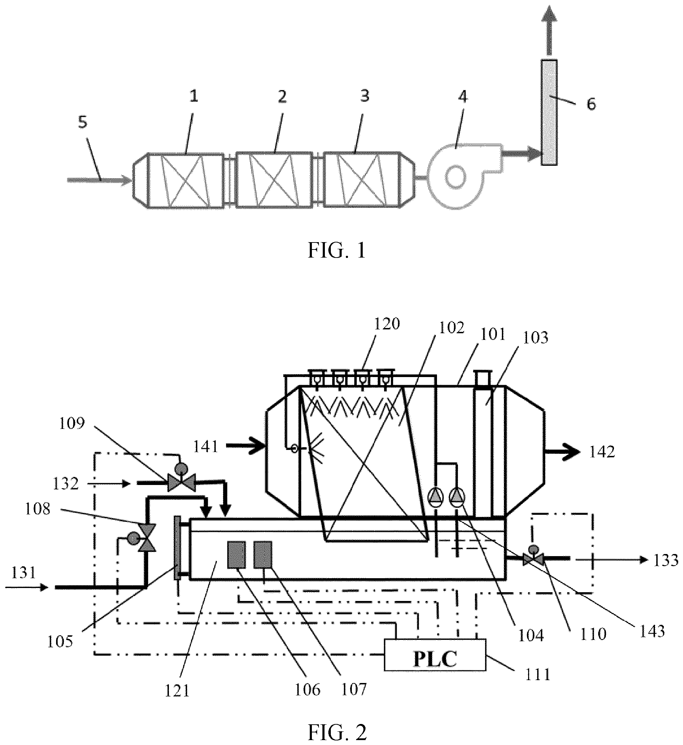

As shown in FIG. 1, the system for wet treatment of nitrogen oxide waste gas includes: a nitrogen monoxide oxidizing device 1, a nitrogen dioxide reducing device 2, and an acidic waste gas treating device 3, which are arranged in sequence from upstream to downstream. The system also includes an air inlet pipeline 5, an air exhaust device 4, and an air exhaust pipeline 6; the air exhaust device 4 is arranged downstream of the acidic waste gas treating device 3, and the air exhaust pipeline 6 is arranged downstream of the air exhaust device 4; the air inlet pipeline 5 is arranged upstream of the nitrogen monoxide oxidizing device 1 and is connected to the nitrogen monoxide oxidizing device 1.

Depending on the concentration of the nitrogen oxide waste gas to be treated, two or more stages of nitrogen monoxide oxidizing devices, two or more stages of nitrogen dioxide reducing devices, or two or more stages of acidic waste gas treating devices can be arranged as required.

### Nitrogen monoxide oxidizing device.

As shown in FIG. 2, the nitrogen monoxide oxidizing device 1 includes a housing 101, a spray port 120, a circulating fluid reservoir 121, a circulating fluid pump 104, a liquid level gauge 105, a redox potential meter 106, a conductivity meter 107, an oxidizer solution supply pipe 131, a water supply pipe 132, a sewage discharge pipe 133, a first valve 108 for controlling replenishment of an oxidizer solution, a second valve 109 for controlling replenishment of water, a third valve 110 for controlling discharge of sewage, an automatic controller 111, a gas inlet 141 for entry of nitrogen oxide waste gas, a gas outlet 142 for discharge of the treated waste gas, and a circulating fluid collection port 143.

The spray port 120 is arranged in the housing 101, the gas inlet 141 is arranged upstream of the housing 101, and the gas outlet 142 is arranged downstream of the housing 101; the circulating fluid collection port 143 is arranged with between the housing 101 and the circulating fluid reservoir 121; and a circulating fluid in the circulating fluid reservoir 121 is pumped by the circulating fluid pump 104, and enters the housing 101through the spray port 120.

The circulating fluid reservoir 121 is separately connected to the liquid level gauge 105, the redox potential meter 106, and the conductivity meter 107; the automatic controller 111 is electrically connected to the liquid level gauge 105, the automatic controller 111 is electrically connected to the second valve 109, the automatic controller 111 is electrically connected to the redox potential meter 106, the automatic controller 111 is electrically connected to the first valve 108, the automatic controller 111 is electrically connected to the conductivity meter 107, and the automatic controller 111 is electrically connected to the third valve 110; and the first valve 108 is arranged on the oxidizer solution supply pipe 131, the second valve 109 is arranged on the water supply pipe 132, and the third valve 110 is arranged on the sewage discharge pipe 133.

The nitrogen monoxide oxidizing device 1 may further include a packing layer 102 and a smog removal layer 103 which are fixed inside the housing 101, the packing layer 102 being located upstream of the smog removal layer 103.

When the nitrogen oxide waste gas enters the nitrogen monoxide oxidizing device 1 through the air inlet pipeline 5, NO in the nitrogen oxide waste gas is in contact with and reacts with an oxidizer in a circulating fluid to oxidize NO to NO₂, and then enters the nitrogen dioxide reducing device in the next stage. The oxidizer is usually one or more of NaClO, NaClO₂, and KMnO₄.

The main component of the packing layer 102 is hollow resin balls (e.g., PP (polypropylene) or PPC (poly(propylene carbonate))), which can increase the contact opportunity of NO with the oxidizer. The smog removal layer 103, of which the main component is hollow resin balls (e.g., PP (polypropylene) or PPC (poly(propylene carbonate))), may prevent the circulation fluid from entering the next-stage treatment unit with the waste gas, which would affect the treatment effect of the next-stage treatment unit, and prevent the resulting increase in oxidizer consumption.

The automatic controller 111 automatically controls the first valve 108 on the oxidizer solution supply pipe 131 according to the detection value of the redox potential meter 106, and the first valve 108 is opened to replenish the oxidizer via the oxidizer solution supply pipe 131 to the circulating fluid when the redox potential is lower than the lower limit of the set value, and replenishing the oxidizer is stopped when the redox potential is higher than the upper limit of the set value.

The automatic controller 111 automatically controls the second valve 109 on the water supply pipe 132 according to the detection value of the liquid level gauge 105, and the second valve 109 is opened to replenish water via the water supply pipe 132 to the circulating fluid when the water level is lower than the lower limit, and replenishing water is stopped when the water level is higher than the upper limit.

The automatic controller 111 automatically controls the third valve 110 on the sewage discharge pipe 133 according to the detection value of the conductivity meter 107, and the third valve 110 on the sewage discharge pipe 133 is opened to discharge the sewage when the conductivity value is higher than the set value.

To improve the effect of the oxidation reaction, an acidic solution can further be added to the circulating fluid of the nitrogen monoxide oxidizing device by the oxidizer solution supply pipe 131.

### Nitrogen dioxide reducing device.

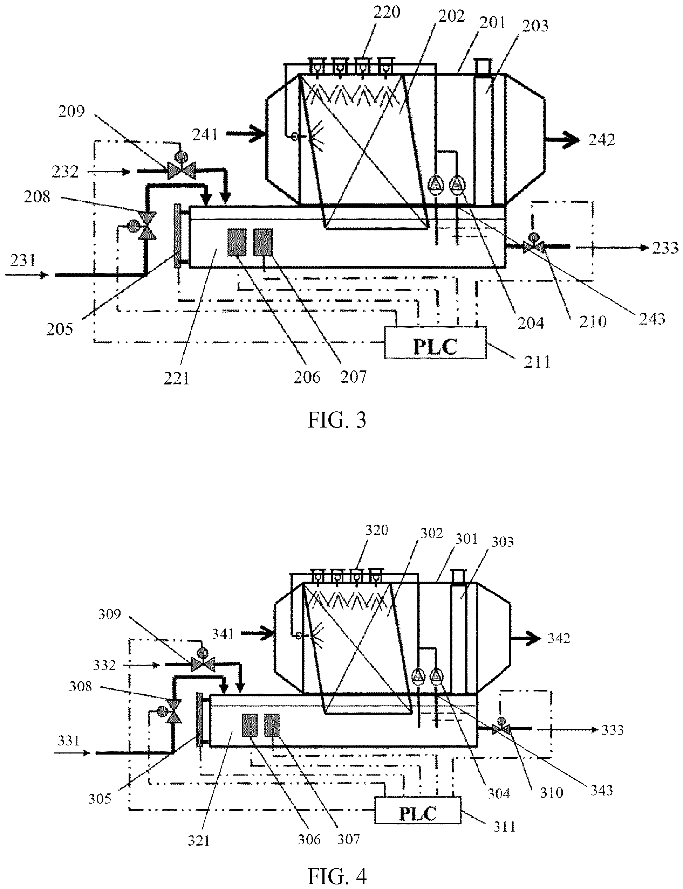

As shown in FIG. 3, the nitrogen dioxide reducing device 2 includes a housing 201, a spray port 220, a circulating fluid reservoir 221, a circulating fluid pump 204, a liquid level gauge 205, a redox potential meter 206, a conductivity meter 207, a reductant solution supply pipe 231, a water supply pipe 232, a sewage discharge pipe 233, a first valve 208 for controlling replenishment of a reductant solution, a second valve 209 for controlling replenishment of water, a third valve 210 for controlling discharge of sewage, an automatic controller 211, a gas inlet 241 for entry of waste gas treated by the nitrogen monoxide oxidizing device 1, a gas outlet 242 for discharge of the treated waste gas, and a circulation fluid collection port 243.

The spray port 220 is arranged in the housing 201, the gas inlet 241 is arranged upstream of the housing 201, and the gas outlet 242 is arranged downstream of the housing 201; the circulation fluid collection port 243 is arranged between the housing 201 and the circulation fluid reservoir 221; and a circulation fluid in the circulation fluid reservoir 221 is pumped by the circulation fluid pump 204, and enters the housing 201 through the spray port 220.

The circulating fluid reservoir 221 is separately connected to the liquid level gauge 205, the redox potential meter 206, and the conductivity meter 207; the automatic controller 211 is electrically connected to the liquid level gauge 205, the automatic controller 211 is electrically connected to the second valve 209, the automatic controller 211 is electrically connected to the redox potential meter 206, the automatic controller 211 is electrically connected to the first valve 208, the automatic controller 211 is electrically connected to the conductivity meter 207, and the automatic controller 211 is electrically connected to the third valve 210; and the first valve 208 is arranged on the reductant solution supply pipe 231, the second valve 209 is arranged on the water supply pipe 232, and the third valve 210 is arranged on the sewage discharge pipe 233.

The nitrogen dioxide reducing device 2 may further include a packing layer 202 and a smog removal layer 203 which are fixed inside the housing 201, the packing layer 202 being located upstream of the smog removal layer 203.

After the waste gas treated by the nitrogen monoxide oxidizing device 1 enters the nitrogen dioxide reducing device, NO₂ in the waste gas is in contact with and reacts with a reductant in a circulating fluid to reduce NO₂ to N₂, and then enters the acidic waste gas treating device 3 in the next stage. The reductant is usually one or more of Na₂S, NaHS, Na₂SO₃, and Na₂S₂O₃.

The main component of the packing layer 202 is hollow resin balls (e.g., PP (polypropylene) or PPC (poly(propylene carbonate))), which can increase the contact opportunity of NO₂ with the reductant. The smog removal layer 203, of which the main component is hollow resin balls (e.g., PP (polypropylene) or PPC (poly(propylene carbonate))), may prevent the circulating fluid from entering the next-stage treatment unit with the waste gas, which would affect the treatment effect of the next-stage treatment unit, and prevent the resulting increase in reductant consumption.

The automatic controller 211 automatically controls the first valve 208 on the reductant solution supply pipe 231 according to the detection value of the redox potential meter 206, and the first valve 208 is opened to replenish the reductant via the reductant solution supply pipe 231 to the circulating fluid when the redox potential is higher than the upper limit of the set value, and replenishing the reductant is stopped when the redox potential is lower than the lower limit of the set value.

The automatic controller 211 automatically controls the second valve 209 on the water supply pipe 232 according to the detection value of the liquid level gauge 205, and the second valve 209 is opened to replenish water via the water supply pipe 232 to the circulating fluid when the water level is lower than the lower limit, and replenishing water is stopped when the water level is higher than the upper limit.

The automatic controller 211 automatically controls the third valve 210 on the sewage discharge pipe 233 according to the detection value of the conductivity meter 207, and the third valve 210 on the sewage discharge pipe 233 is opened to discharge the sewage when the conductivity value is higher than the set value.

To improve the effect of the reduction reaction and inhibit the production of elementary substance S, an alkaline solution can further be added to the circulating fluid of the nitrogen dioxide reducing device by the reductant solution supply pipe 231.

### Acidic waste gas treating device.

As shown in FIG. 4, the acidic waste gas treating device 3 includes a housing 301, a spray port 320, a circulating fluid reservoir 321, a circulating fluid pump 304, a liquid level gauge 305, a pH value tester 306, a conductivity meter 307, a sodium hydroxide solution supply pipe 331, a water supply pipe 332, a sewage discharge pipe 333, a first valve 308 for controlling replenishment of a sodium hydroxide solution, a second valve 309 for controlling replenishment of water, a third valve 310 for controlling discharge of sewage, an automatic controller 311, a gas inlet 341 for entry of waste gas treated by the nitrogen dioxide reducing device 2, a gas outlet 342 for discharge of the treated waste gas, and a circulation fluid collection port 343.

The spray port 320 is arranged in the housing 301, the gas inlet 341 is arranged upstream of the housing 301, and the gas outlet 342 is arranged downstream of the housing 301; the circulating fluid collection port 343 is arranged between the housing 301 and the circulating fluid reservoir 321, and a circulating fluid in the circulating fluid reservoir 321 is pumped by the circulating fluid pump 304, and enters the housing 301 through the spray port 320.

The circulating fluid reservoir 321 is separately connected to the liquid level gauge 305, the pH value tester 306, and the conductivity meter 307; the automatic controller 311 is electrically connected to the liquid level gauge 305, the automatic controller 311 is electrically connected to the second valve 309, the automatic controller 311 is electrically connected to the pH value tester 306, the automatic controller 311 is electrically connected to the first valve 308, the automatic controller 311 is electrically connected to the conductivity meter 307, and the automatic controller 311 is electrically connected to the third valve 310; and the first valve 308 is arranged on the sodium hydroxide solution supply pipe 331, the second valve 309 is arranged on the water supply pipe 332, and the third valve 310 is arranged on the sewage discharge pipe 333.

The acidic waste gas treating device 3 may further include a packing layer 302 and a smog removal layer 303 which are fixed inside the housing 301, the packing layer 302 being located upstream of the smog removal layer 303.

After the waste gas treated by the nitrogen dioxide reducing device 2 (the main components are hydrogen sulfide and other acidic waste gases) enters the acidic waste gas treating device 3, H₂S and other acidic waste gases in the waste gas come into contact with sodium hydroxide in the circulating fluid and undergo a neutralization reaction to produce salt and water, and at this time, the harmful substances in the waste gas have been substantially removed, and can be exhausted into the atmosphere through the air exhaust pipeline 6 after being pressurized by using the air exhaust device 4.

The main component of the packing layer 302 is hollow resin balls (e.g., PP (polypropylene) or PPC (poly(propylene carbonate))), which can increase the contact opportunity of H₂S and other acidic waste gases with sodium hydroxide. The main component of the smog removal layer 303 is hollow resin balls (e.g., PP (polypropylene) or PPC (poly(propylene carbonate))), which may prevent the circulation fluid from entering the air exhaust device with the waste gas, which would affect the normal operation of the air exhaust device, and prevent the resulting increase in sodium hydroxide consumption.

The automatic controller 311 automatically controls the first valve 308 on the sodium hydroxide solution supply pipe 331 according to the detection value of the pH value tester 306, and the first valve 308 is opened to replenish sodium hydroxide via the sodium hydroxide solution supply pipe 331 to the circulating fluid when the pH value is lower than the lower limit of the set value, and replenishing sodium hydroxide is stopped when the pH value is higher than the upper limit of the set value.

The automatic controller 311 automatically controls the second valve 309 on the water supply pipe 332 according to the detection value of the liquid level gauge 305, and the second valve 309 is opened to replenish water via the water supply pipe 332 to the circulating fluid when the water level is lower than the lower limit, and replenishing water is stopped when the water level is higher than the upper limit.

The automatic controller 311 automatically controls the third valve 310 on the sewage discharge pipe 333 according to the detection value of the conductivity meter 307, and the third valve 310 on the sewage discharge pipe 333 is opened to discharge the sewage when the conductivity value is higher than the set value.

As shown in FIG. 1, the nitrogen monoxide oxidizing device 1, the nitrogen dioxide reducing device 2, and the acidic waste gas treating device 3 are all horizontal.

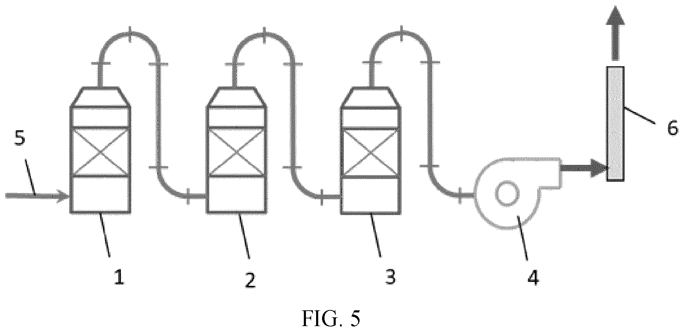

According to another embodiment of the present application, the nitrogen monoxide oxidizing device 1, the nitrogen dioxide reducing device 2, and the acidic waste gas treating device 3 are all vertical, as shown in FIG. 5.

The present application also provides a method for wet treatment of nitrogen oxide waste gas, including the following steps:
S100: oxidizing nitrogen monoxide to nitrogen dioxide;
S101: reducing nitrogen dioxide; and
S102: treating an acidic waste gas.

According to some embodiments of the present application, the S100 may be performed in a nitrogen monoxide oxidizing device 1; the step S101 may be performed in a nitrogen dioxide reducing device 2; and the step S102 may be performed in an acidic waste gas treating device 3.

In this application, the nitrogen oxide waste gas to be treated does not need to be heated and can enter the nitrogen monoxide oxidizing device 1 at room temperature through the gas inlet 141. The concentration of NO in the waste gas is generally less than 1000mg/m³ according to the permissible NOₓ emission standard of less than 50mg/m³, beyond which a further nitrogen monoxide oxidizing device should be installed.

In this application, the waste gas treated by the step S100 does not need to be heated and can enter the nitrogen dioxide reducing device 2 through the gas inlet 241 at room temperature. The concentration of NO₂ in the waste gas is generally less than 1000mg/m³ according to the permissible NOₓ emission standard of less than 50mg/m³, beyond which a further nitrogen dioxide reducing device should be installed.

According to some embodiments of the present application, in the S100, an oxidizer solution is used to perform the oxidizing, an oxidizer in the oxidizer solution being selected from one or more of NaClO, NaClO₂, and KMnO₄.

An inorganic acid, such as sulfuric acid, may further be added to the oxidizer solution of the present application to improve the effect of the oxidation reaction.

According to some embodiments of the present application, in the S100, when oxidizing nitrogen monoxide to nitrogen dioxide, the redox potential of the oxidizer solution is between 200mV and 800mV, and may be, for example, 200mV, 250mV, 300mV, 350mV, 400mV, 500mV, 700mV, 800mV, etc.

According to some embodiments of the present application, in the S101, a reductant solution is used to perform the reducing, a reductant in the reductant solution being selected from one or more of Na₂S, NaHS, Na₂SO₃, and Na₂S₂O₃.

An inorganic base, such as sodium hydroxide, may further be added to the reductant solution of the present application to improve the effect of the reduction reaction.

According to some embodiments of the present application, in the S101, when reducing nitrogen dioxide, the redox potential of the reductant solution is between -200mV and -500mV, and may be, for example, -200mV, -250mV, -300mV, -350mV, -400mV, -450mV, -500mV, etc.

According to some embodiments of the present application, in the S102, a sodium hydroxide solution is used for treating the acidic waste gas.

According to some embodiments of the present application, the sodium hydroxide solution has a pH value of 9 to 13, and may have a pH value of, for example, 9, 10, 11, 12, etc. According to one embodiment of the present application, the sodium hydroxide solution has a pH value of 10 to 12.

### Embodiment 1.

Nitrogen oxide waste gas with a concentration of 400 mg/m³ was introduced into the nitrogen monoxide oxidizing device 1 at room temperature, NO in the waste gas was oxidized to NO₂, and the oxidizer solution used was a NaClO solution, and the redox potential was 300 mV when the oxidation reaction was carried out. It was detected that the concentration of NO at the gas outlet 142 was 8 mg/m³ and the concentration of NO₂ at the gas outlet 142 was 428 mg/m³. The waste gas from the gas outlet 142 was introduced into the nitrogen dioxide reducing device 2 at room temperature, NO₂ in the waste gas was reduced to N₂, and the reductant solution used was a Na₂S solution, and the redox potential was -250mV when the reduction reaction was carried out. It was detected that the concentration of NO₂ at the gas outlet 242 was 72 mg/m³ and the concentration of H₂S at the gas outlet 242 was 10 mg/m³. The waste gas from the gas outlet 242 was introduced into the acidic waste gas treating device 3 at room temperature, H₂S in the waste gas was converted into Na₂S or NaHS, and the used sodium hydroxide solution had a pH value of 10. It was detected that the concentrations of NO, NO₂, and H₂S at the gas outlet 342 were 9 mg/m³, 61 mg/m³, and 1.2 mg/m³, respectively, and the treatment efficiency of the nitrogen oxide waste gas was calculated to be 82.5%.

### Embodiment 2.

Nitrogen oxide waste gas with a concentration of 400mg/m³ was introduced into the nitrogen monoxide oxidizing device 1 at room temperature, and NO in the waste gas was oxidized to NO₂. The oxidizer solution used was a NaClO₂ solution, and the redox potential was 500mV when the oxidation reaction was carried out. It was detected that the concentration of NO at the gas outlet 142 was 5mg/m³ and the concentration of NO₂ at the gas outlet 142 was 431mg/m³. The waste gas from the gas outlet 142 was introduced into the nitrogen dioxide reducing device 2 at room temperature, NO₂ in the waste gas was reduced to N₂, and the reductant solution used was a NaHS solution, and the redox potential was -450mV when the reduction reaction was carried out. It was detected that the concentration of NO₂ at the gas outlet 242 was 27.5 mg/m³ and the concentration of H₂S at the gas outlet 242 was 12 mg/m³. The waste gas from the gas outlet 242 was introduced into the acidic waste gas treating device 3 at room temperature, H₂S in the waste gas was converted into Na₂S or NaHS, and the pH value of the sodium hydroxide solution used was 11. It was detected that the concentrations of NO, NO₂ and H₂S at the gas outlet 342 were 5.5 mg/m³, 23 mg/m³ and 1.3 mg/m³, respectively, and the treatment efficiency of the nitrogen oxide waste gas was calculated to be 92.9%.

### Embodiment 3.

Nitrogen oxide waste gas with a concentration of 800mg/m³ was introduced into the nitrogen monoxide oxidizing device 1 at room temperature, NO in the waste gas was oxidized to NO₂, the oxidizer solution used was a NaClO₂ solution, and the redox potential was 800mV when the oxidation reaction was carried out. It was detected that the concentration of NO at the gas outlet 142 was 4.8mg/m³ and the concentration of NO₂ at the gas outlet 142 was 873mg/m³. The waste gas from the gas outlet 142 was introduced into the nitrogen dioxide reducing device 2 at room temperature, NO₂ in the waste gas was reduced to N₂, and the reductant solution used was a Na₂S₂O₃ solution, and the redox potential was -500mV when the reduction reaction was carried out. It was detected that the concentration of NO₂ at the gas outlet 242 was 37.5mg/m³ and the concentration of H₂S at the gas outlet 242 was 15mg/m³. The waste gas from the gas outlet 242 was introduced into the acidic waste gas treating device 3 at room temperature, H₂S in the waste gas was converted into Na₂S or NaHS, and the pH value of the sodium hydroxide solution used was 9. It was detected that the concentrations of NO, NO₂ and H₂S at the gas outlet 342 were 5.5mg/m³, 33.5mg/m³ and 2.5mg/m³, respectively, and the treatment efficiency of the nitrogen oxide waste gas was calculated to be 95.1%.

### Embodiment 4.

Nitrogen oxide waste gas with a concentration of 800mg/m³ was introduced into the nitrogen monoxide oxidizing device 1 at room temperature, NO in the waste gas was oxidized to NO₂, and the oxidizer solution used was a NaClO solution, and the redox potential was 600mV when the oxidation reaction was carried out. It was detected that the concentration of NO at the gas outlet 142 was 6.8 mg/m³ and the concentration of NO₂ at the gas outlet 142 was 870 mg/m³. The waste gas from the gas outlet 142 was introduced into the nitrogen dioxide reducing device 2 at room temperature, NO₂ in the waste gas was reduced to N₂, and the reductant solution used was a Na₂SO₃ solution, and the redox potential was -400mV when the reduction reaction was carried out. It was detected that the concentration of NO₂ at the gas outlet 242 was 78.5 mg/m³ and the concentration of H₂S at the gas outlet 242 was 11 mg/m³. The waste gas from the gas outlet 242 was introduced into the acidic waste gas treating device 3 at room temperature, H₂S in the waste gas was converted into Na₂S or NaHS, and the pH value of the sodium hydroxide solution used was 12. It was detected that the concentrations of NO, NO₂, and H₂S at the gas outlet 342 were 7 mg/m³, 64.8 mg/m³, and 1 mg/m³, respectively, and the treatment efficiency of the nitrogen oxide waste gas was calculated to be 91%.

It is apparent that various modifications and variations to this application can be made by a person skilled in the art without departing from the spirit and scope of this application. Thus, if these modifications and variations of this application fall within the scope of the claims of this application and its equivalent technology, this application is also intended to include these modifications and variations.

## Claims

1. A method for wet treatment of nitrogen oxide waste gas, comprising:
S100: oxidizing nitrogen monoxide to nitrogen dioxide;
S101: reducing nitrogen dioxide; and
S102: treating an acidic waste gas.

2. The method according to claim 1, wherein in the S100, an oxidizer solution is used to perform the oxidizing, and an oxidizer in the oxidizer solution is a soluble salt oxidizer.

3. The method according to claim 2, wherein the oxidizer in the oxidizer solution is selected from at least one of hypochlorite, chlorite or permanganate.

4. The method according to claim 2, wherein the oxidizer in the oxidizer solution is selected from at least one of NaClO, NaClO₂, or KMnO₄.

5. The method according to claim 2, wherein in the S100, a redox potential of the oxidizer solution is between 200mV and 800mV in response to oxidize nitrogen monoxide to nitrogen dioxide.

6. The method according to claim 1, wherein in the S101, a reductant solution is used to perform the reducing, and a reductant in the reductant solution is a soluble salt reductant.

7. The method according to claim 6, wherein the soluble salt reductant comprises at least one of a sulfide salt, a hydrosulphide salt, a sulfate or a thiosulfate.

8. The method according to claim 6, wherein the reductant in the reductant solution is selected from at least one of Na₂S, NaHS, Na₂SO₃, or Na₂S₂O₃.

9. The method according to claim 6, wherein in the S101, a redox potential of the reductant solution is between -200mV and -500mV in response to reduce nitrogen dioxide.

10. The method according to claim 1, wherein in the S102, an alkali solution is used for treating the acidic waste gas.

11. The method according to claim 10, wherein the alkali solution comprises at least one of sodium hydroxide, potassium hydroxide, barium hydroxide or an ammonia solution.

12. The method according to claim 10, wherein in the S102, a sodium hydroxide solution is used for treating the acidic waste gas.

13. The method according to claim 12, wherein the sodium hydroxide solution has a pH value of 9 to 13.

14. A system for wet treatment of nitrogen oxide waste gas, comprising: a nitrogen monoxide oxidizing device, a nitrogen dioxide reducing device, and an acidic waste gas treating device, which are arranged in sequence from upstream to downstream.

15. The system according to claim 14, further comprising an air inlet pipeline, an air exhaust device and an air exhaust pipeline, wherein the air exhaust device is arranged a downstream of the acidic waste gas treating device and the air exhaust pipeline is arranged a downstream of the air exhaust device; the air inlet pipeline is arranged a upstream of the nitrogen monoxide oxidizing device and is connected to the nitrogen monoxide oxidizing device.

16. The system according to claim 14, wherein the nitrogen monoxide oxidizing device comprises a housing, a spray port, a circulating fluid reservoir, a circulating fluid pump, a liquid level gauge, a redox potential meter, a conductivity meter, an oxidizer solution supply pipe, a water supply pipe, a sewage discharge pipe, a first valve for controlling replenishment of an oxidizer solution, a second valve for controlling replenishment of water, a third valve for controlling discharge of sewage, an automatic controller, a gas inlet for entry of nitrogen oxide waste gas, a gas outlet for discharge of the treated waste gas, and a circulating fluid collection port;
the spray port is arranged in the housing, the gas inlet is arranged a upstream of the housing and the gas outlet is arranged a downstream of the housing; the circulating fluid collection port is arranged between the housing and the circulating fluid reservoir; and a circulating fluid in the circulating fluid reservoir is pumped by the circulating fluid pump, and enters the housing through the spray port; and
the circulating fluid reservoir is separately connected to the liquid level gauge, the redox potential meter, and the conductivity meter; the automatic controller is electrically connected to the liquid level gauge, the automatic controller is electrically connected to the second valve, the automatic controller is electrically connected to the redox potential meter, the automatic controller is electrically connected to the first valve, the automatic controller is electrically connected to the conductivity meter, and the automatic controller is electrically connected to the third valve; and the first valve is arranged on the oxidizer solution supply pipe, the second valve is arranged on the water supply pipe, and the third valve is arranged on the sewage discharge pipe.

17. The system according to claim 14, wherein the nitrogen dioxide reducing device comprises a housing, a spray port, a circulating fluid reservoir, a circulating fluid pump, a liquid level gauge, a redox potential meter, a conductivity meter, a reductant solution supply pipe, a water supply pipe, a sewage discharge pipe, a first valve for controlling replenishment of a reductant solution, a second valve for controlling replenishment of water, a third valve for controlling discharge of sewage, an automatic controller, a gas inlet for entry of waste gas treated by the nitrogen monoxide oxidizing device, a gas outlet for discharge of the treated waste gas, and a circulating fluid collection port;
the spray port is arranged in the housing, the gas inlet is arranged a upstream of the housing and the gas outlet is arranged a downstream of the housing; the circulating fluid collection port is arranged between the housing and the circulating fluid reservoir; and a circulating fluid in the circulating fluid reservoir is pumped by the circulating fluid pump, and enters the housing through the spray port; and
the circulating fluid reservoir is separately connected to the liquid level gauge, the redox potential meter, and the conductivity meter; the automatic controller is electrically connected to the liquid level gauge, the automatic controller is electrically connected to the second valve, the automatic controller is electrically connected to the redox potential meter, the automatic controller is electrically connected to the first valve, the automatic controller is electrically connected to the conductivity meter, and the automatic controller is electrically connected to the third valve; and the first valve is arranged on the reductant solution supply pipe, the second valve is arranged on the water supply pipe and the third valve is arranged on the sewage discharge pipe.

18. The system according to claim 14, wherein the acidic waste gas treating device comprises a housing, a spray port, a circulating fluid reservoir, a circulating fluid pump, a liquid level gauge, a pH value tester, a conductivity meter, a sodium hydroxide solution supply pipe, a water supply pipe, a sewage discharge pipe, a first valve for controlling replenishment of a sodium hydroxide solution, a second valve for controlling replenishment of water, a third valve for controlling discharge of sewage, an automatic controller, a gas inlet for entry of waste gas treated by the nitrogen dioxide reducing device, a gas outlet for discharge of the treated waste gas, and a circulating fluid collection port;
the spray port is arranged in the housing, the gas inlet is arranged a upstream of the housing and the gas outlet is arranged a downstream of the housing; the circulating fluid collection port is arranged between the housing and the circulating fluid reservoir; and a circulating fluid in the circulating fluid reservoir is pumped by the circulating fluid pump, and enters the housing through the spray port; and
the circulating fluid reservoir is separately connected to the liquid level gauge, the pH value tester, and the conductivity meter; the automatic controller is electrically connected to the liquid level gauge, the automatic controller is electrically connected to the second valve, the automatic controller is electrically connected to the pH value tester, the automatic controller is electrically connected to the first valve, the automatic controller is electrically connected to the conductivity meter, and the automatic controller is electrically connected to the third valve; and the first valve is arranged on the sodium hydroxide solution supply pipe, the second valve is arranged on the water supply pipe, and the third valve is arranged on the sewage discharge pipe.
